# EUROPÄISCHE PATENTANMELDUNG

(11) **EP 1 813 779 A1**
(43) Veröffentlichungstag der Anmeldung: **01.08.2007**
(21) Anmeldenummer: 06002001.3
(22) Anmeldetag: 31.01.2006
(51) Int. Cl.: F01D 17/18, F16K 3/02, F16K 11/065

(54) **Ventil einer Dampfturbine**

(71) Anmelder: SIEMENS AKTIENGESELLSCHAFT, 80333 München (DE)
(72) Erfinder: Geist, Richard, 91207 Lauf (DE); Höne, Bernd, 90409 Nürnberg (DE); Pfeffer, Gerhard, 90461 Nürnberg (DE)

(57) **Zusammenfassung**

Die Erfindung betrifft ein Ventil (1) einer Dampfturbine zur Steuerung des einströmenden Dampfstroms (2) mit einem Schließelement, welches translatorisch beweglich relativ zu mindestens einer ersten Durchlassöffnung (4) ausgebildet ist. Herkömmliche Anordnungen sind äußerst aufwendig, kostspielig und in ihrer Konstruktion schlecht variierbar. Die Erfindung schafft hier Abhilfe durch den Vorschlag, das Schließelement als Schieber (10) auszubilden, welcher Schieber (10) in einer die erste Durchlassöffnung (4) verschließenden ersten Stellung (31) an einer Fläche (11) anliegt, welche die erste Durchlassöffnung (4) umgibt, wobei der Schieber (10) in einer zu der Fläche (11) parallelen ersten Ebene (20) verschieblich ausgebildet ist, so dass der Querschnitt der ersten Durchlassöffnung (4) bei einer Verschiebung des Schiebers (10) aus der ersten Stellung (31) in eine zweite Stellung (32) zumindest teilweise durchlässig ist.

## Beschreibung

Die Erfindung betrifft ein Ventil einer Dampfturbine zur Steuerung des einströmenden Dampfstroms mit einem Schließelement, welches translatorisch beweglich relativ zumindest in einer ersten Durchlassöffnung ausgebildet ist.

Die Bedeutung von Dampfturbinen in der Energieerzeugung wird auf unabsehbare Zeit hoch sein. Vor großen Herausforderungen sieht man sich bei der Steuerung des Einlasses von Frischdampf in die Dampfturbine gestellt. In der Frischdampfleitung sind zu diesem Zweck regelmäßig so genannte Schnellschlussventile und Regelventile angeordnet, wobei die erst genannten Ventile eine nahezu augenblickliche Unterbrechung des Frischdampfstroms ermöglichen und die Regelventile die Quantität des Dampfstromes in der Weise zu steuern vermögen, dass eine exakte Regelung der Drehzahl auch bei schwankendem Lastmoment stattfindet. Die hohen Temperaturen und die gewaltigen Kräfte resultierend aus dem hohen Druck des Frischdampfs und der Größe des zu versperrenden Querschnitts haben eine aufwendige Konstruktion dieser Bauelemente zur Folge. Regelventile werden hierbei häufig als mehrsitzige Schiebeventile ausgebildet, wobei regelmäßig ein Ventilkegel relativ zu einem Ventilsitz sich annähernd oder entfernend bewegt und auf diese Weise die Öffnung des Durchlasses für den Frischdampf verändert wird. Diese Konstruktion hat jedoch aufgrund der Umleitung des Dampfes in Folge der Kegel- und Sitzgeometrie hohe Druckverluste zur Folge, wobei verhältnismäßig hohe Leckagen üblich sind. Hinzukommt, dass beispielsweise bei den Doppelsitzschiebeventilen eine konstruktive Variation der Öffnungsreihenfolge der Ventile nicht möglich ist.

Aus der Offenlegungsschrift DE 198 10 580 A1 ist beispielsweise ein Dampfeinlassventil bekannt, bei welchem das Absperrorgan als Drehwalze ausgebildet ist, die über einen in der Oberfläche vorgesehenen Kanal je nach Drehstellung den Dampfeinlass mit einem in einem Dampfsammelraum mündenden Dampfauslass verbindet. Diese Anordnung ist jedoch aufgrund der verhältnismäßig starken Umlenkung des Dampfes entlang des sich an der Oberfläche der Walze erstreckenden Kanals mit hohen Strömungsverlusten behaftet und ist daneben konstruktiv äußerst aufwendig, da eine großflächige Abdichtung der Drehwalze erforderlich ist. Die massiv auszubildende Drehwalze muss, um die Strömungsverluste in einem akzeptablen Ausmaß zu halten, einen unverhältnismäßig großen Durchmesser aufweisen. Bei nur teilweiser Öffnung der Durchlässe ist mit gewaltigen Druckverlusten auch in Folge von Wirbelbildungen zu rechnen.

Ausgehend von den Problemen und Nachteilen des Standes der Technik hat es sich die Erfindung zur Aufgabe gemacht, ein Ventil zur Steuerung des Einlasses von Frischdampf in eine Dampfturbine zu schaffen, welches bei hoher Regelungsgüte und niedrigen Strömungsverlusten einen verhältnismäßig geringen konstruktiven Aufwand mit sich bringt.

Zur Lösung der angegebenen Aufgabe schlägt die Erfindung vor, das Schließelement als Schieber auszubilden, welcher Schieber in einer die erste Durchgangsöffnung verschließenden ersten Stellung an einer Fläche anliegt, welche die erste Durchlassöffnung umgibt, wobei der Schieber in einer zu der Fläche parallelen ersten Ebene verschieblich ausgebildet ist, so dass der Querschnitt der ersten Durchlassöffnung bei einer Verschiebung des Schiebers aus der ersten Stellung in eine zweite Stellung zumindest teilweise durchlässig ist. Diese verhältnismäßig einfache Lösung zur Steuerung des Frischdampfzustroms hat den entscheidenden Vorteil, dass eine nur verhältnismäßig geringe Umlenkung des Dampfes insbesondere bei vollständiger Öffnung des Schiebers erfolgt. Bei vollständiger Schließung des Schiebers wird dieser von dem Frischdampfdruck gegen die Fläche gedrückt, so dass bei entsprechender Oberflächenbeschaffenheit eine nur geringe Lässigkeit ergibt. Der flache und einfache Aufbau ist äußerst kostengünstig und wenig fehleranfällig. Da der Schieber nicht auf die Dichtung bzw. die Fläche, an der er in der geschlossenen Stellung anliegt, aufsetzt, sondern vielmehr an dieser entlang gleitend bis zur geschlossenen Stellung, ist eine Leckage in Folge von Verunreinigungen nahezu ausgeschlossen. Wird der Schieber geschlossen, wirkt dies nahezu selbstreinigend auf die Anordnung.

Eine besonders robuste Anordnung ergibt sich, wenn der Schieber Durchbrechungen aufweist, welche sich in Längsrichtung der Verschiebung des Schiebers neben den Abdeckungen befinden und die sich bei durchlässiger Freigabe der Durchlassöffnungen in zumindest teilweiser Überdeckung mit den Durchlassöffnungen befinden. Auf diese Weise lässt sich der Schieber besonders exakt führen und die Kräfte aus dem Frischdampf auf das Absperrorgan lassen sich vorteilhaft kontrollieren, da eine Lagerung des Schiebers auch an gegenüberliegenden Orten der Durchlassöffnung möglich ist.

In weiterer Ausgestaltung kann das Ventil mit Vorteil neben der ersten Durchlassöffnung mindestens eine zweite Durchlassöffnung angeordnet ist und der Schieber neben der ersten Abdeckung eine zweite Abdeckung aufweist, welche in der zweiten Stellung sich mit der zweiten Durchlassöffnung überdeckt und entsprechend dieser Überdeckung einen Durchlass des Ventils unterbindet, wobei in einer mittels Verschiebung des Schiebers in der ersten Ebene zu erreichenden dritten Stellung des Schiebers die erste Abdeckung die erste Durchlassöffnung und die zweite Abdeckung die zweite Durchlassöffnung jeweils höchstens teilweise überdecken und entsprechend ein Durchlass des Ventils hergestellt ist. In der zweiten Stellung des Schiebers wird die zweite Durchlassöffnung verschlossen und die erste Durchlassöffnung ist freigegeben, wodurch entsprechend ein Durchlass des Ventils hergestellt ist.

Zusätzliche Regelungs- und Steuermöglichkeiten ergeben sich, wenn neben der ersten und zweiten Durchlassöffnung mindestens eine dritte Durchlassöffnung angeordnet ist und der Schieber neben der ersten und der zweiten Abdeckung eine dritte Abdeckung aufweist. Mittels einer Verschiebung des Schiebers in der ersten Ebene in Richtung einer vierten Stellung ergibt sich eine Freigabe der dritten Durchlassöffnung von der dritten Abdeckung und damit eine Durchlässigkeit. In dieser Stellung sind auch die erste und die zweite Durchlassöffnung mit der ersten bzw. zweiten Abdeckung zumindest teilweise nicht in Überdeckung und damit durchlässig. Befindet sich der Schieber in der ersten, zweiten oder dritten Stellung ist die dritte Durchlassöffnung von dem Schieber verschlossen. Auf diese Weise ist es möglich, mittels einer Verschiebung des Schiebers schrittweise die Durchlassöffnungen zu öffnen bzw. zu schließen und auf diese Weise auf Veränderungen des Lastmomentes zur Regelung der Drehzahl über einen weiten Bereich zu reagieren.

Trotz der Einfachheit der Konstruktion ist die erfindungsgemäße Anordnung der Lage, alle Anforderungen einer modernen Ventilschaltung für Dampfturbinen zu erfüllen, nämlich niedrige Einströmverluste mit einer guten Dichtheit und einer angemessenen konstruktiven Freiheit betreffend die Öffnungsreihenfolge verschiedener Durchlässe zu kombinieren. Daneben kann eine mechanische und strömungstechnische Berechnung verhältnismäßig einfach ausfallen. Da im Wesentlichen nur ein einziges bewegtes Bauteil, nämlich der Schieber, erforderlich ist, ergibt sich ein nur geringer Wartungsaufwand. Außerdem ist mit nur geringen Kräften auf den Schieber zu rechnen, so dass ein einziger Servomotor ausreichend ist, die Ventilsteuerung zu übernehmen. Im Vergleich zu einer hydraulischen Betätigung ergeben sich neben Kostenersparnissen auch bedeutende Sicherheitsvorteile, da im heißen Umgebungsbereich der Turbine kein Hydrauliköl mehr eingesetzt werden muss.

Im Folgenden ist die Erfindung anhand eines speziellen Ausführungsbeispiels unter Bezugnahme auf Zeichnungen näher erläutert. Es zeigen:
- Figuren 1, 2, 3:: jeweils einen Schnitt durch ein erfindungsgemäßes Ventil,
- Figuren 4, 5, 6, 7:: jeweils eine Zusammenstellung eines erfindungsgemäßen Ventils mit einem Turbinengehäuse, wobei der Schieber des erfindungsgemäßen Ventils verschiedene Stellungen aufweist,
- Figur 8:: einen Schnitt durch ein Dichtsystem an einem erfindungsgemäßen Schieber,
- Figur 9: eine perspektivische Darstellung einer Flachkäfigführung für einen erfindungsgemäßen Schieber.

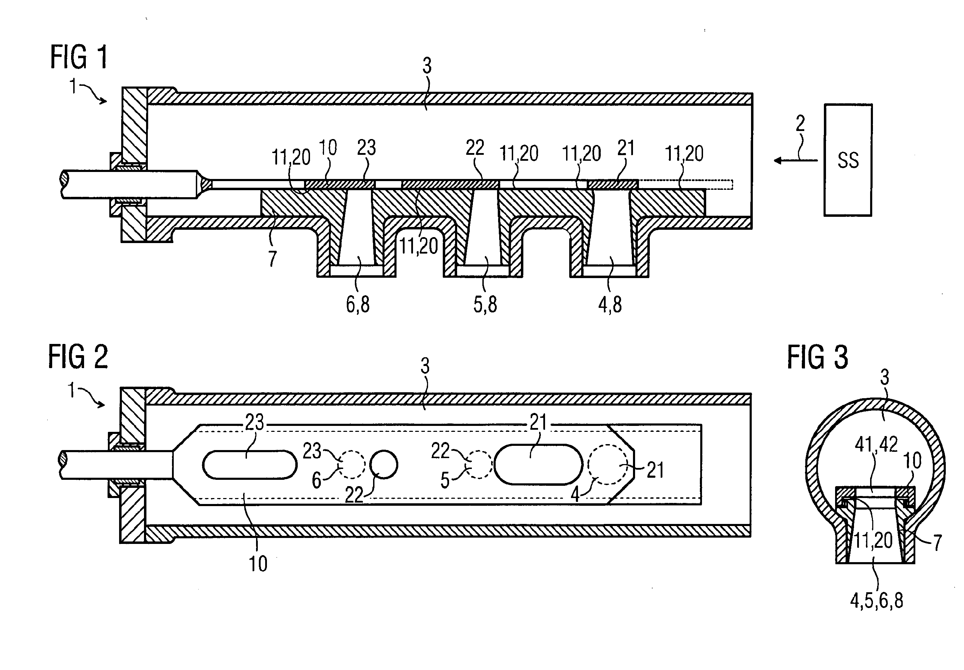

Die Figuren 1, 2, 3 zeigen jeweils einen Schnitt durch ein erfindungsgemäßes Ventil 1, wobei Figuren 1 und 2 einen Längsschnitt zeigen und die Figur 3 einen Querschnitt. Ausgehend von einem nur symbolhaft dargestellten Schnellschlussventil SS ist ein Dampfstrom 2 in eine Eintrittkammer 3 des erfindungsgemäßen Ventils 1 gerichtet. Das Ventil 1 weist drei Durchlassöffnungen, eine erste Durchlassöffnung 4, eine zweite Durchlassöffnung 5 und eine dritte Durchlassöffnung 6 auf. Die drei Durchlassöffnungen 4, 5, 6 sind als konische Ausnehmungen in einer Führung 7 ausgebildet. Aufgrund ihrer Konizität bilden diese Ausnehmungen Diffusorhälse 8, in denen die Strömung abgebremst wird.

Auf der Führung 7 ist ein Schieber 10 gelagert, der an Flächen 11 anliegt, die jeweils die Durchlassöffnungen 4, 5, 6 umgeben und sich zu einer zusammenhängenden Fläche 11 ergänzen.

In der Darstellung der Figur 1 befindet sich der Schieber 10 in einer ersten Stellung 31, in der der Schieber 10 sämtliche Durchlassöffnungen 4, 5, 6 verschlossen hält. Der Schieber ist in einer Ebene 20 verschieblich auf der Führung 7 und parallel zu den Flächen 11 bzw. den durch die Grenzkanten der Durchlassöffnungen 4, 5, 6 definierten Flächen gelagert.

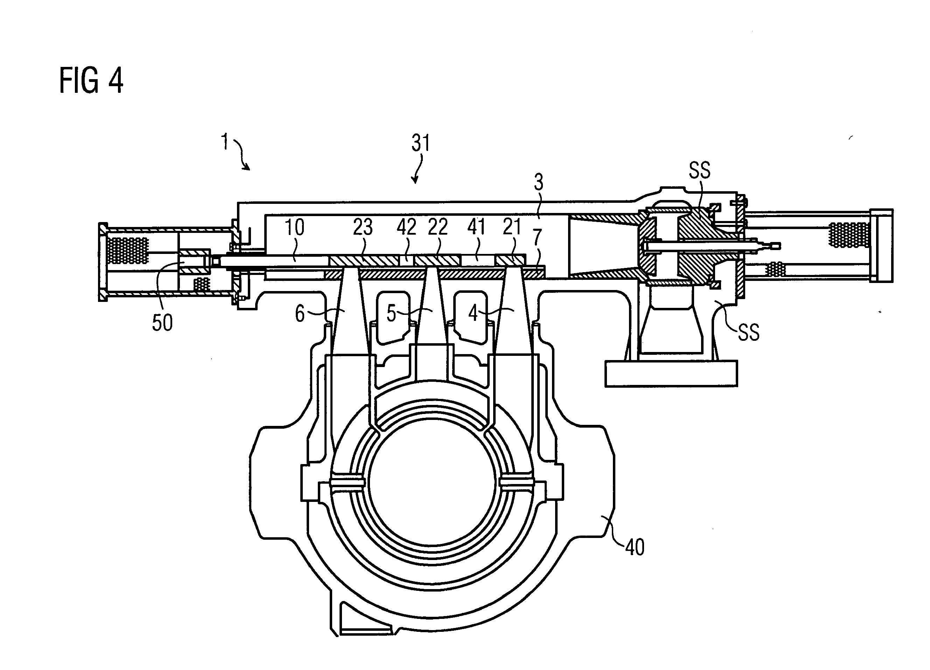

Der Schieber 10 ist länglich ausgebildet und weist entlang seiner Längserstreckung, die auch der Richtung seiner Verschieblichkeit entspricht, hintereinander angeordnete Abdeckungen auf, nämlich eine erste Abdeckung 21, eine zweite Abdeckung 22 und eine dritte Abdeckung 23. Zwischen den Abdeckungen 21, 22, 23 befinden sich Durchbrechungen 41, 42. Die Abdeckungen 21, 22, 23 und Durchbrechungen 41, 42 sind von individueller Größe und so aufeinander abgestimmt, dass die einzelnen Durchlassöffnungen 4, 5, 6 gezielt mit den Abdeckungen 21, 22, 23 bzw. den Durchbrechungen 41, 42 in Überdeckung gebracht werden können und auf diese Weise gezielt bestimmte Durchlässigkeiten erzeugt werden können. Im Einzelnen ist dies in den Figuren 4 - 7 abgebildet.

Die Figuren 4 - 7 zeigen das Zusammenwirken des Ventils 1 mit einer Dampfturbine, deren Turbinengehäuse 40 dargestellt ist. In der Richtung des Dampfstroms 2 vor dem erfindungsgemäßen Ventil 1 befindet sich ein Schnellschlussventil SS. Der Schieber 10 ist mittels eines Servomotors 50 angetrieben.

In der in Figur 4 gezeigten ersten Stellung 31 des Schiebers 10 sind alle drei Durchlassöffnungen 4, 5, 6 geschlossen.

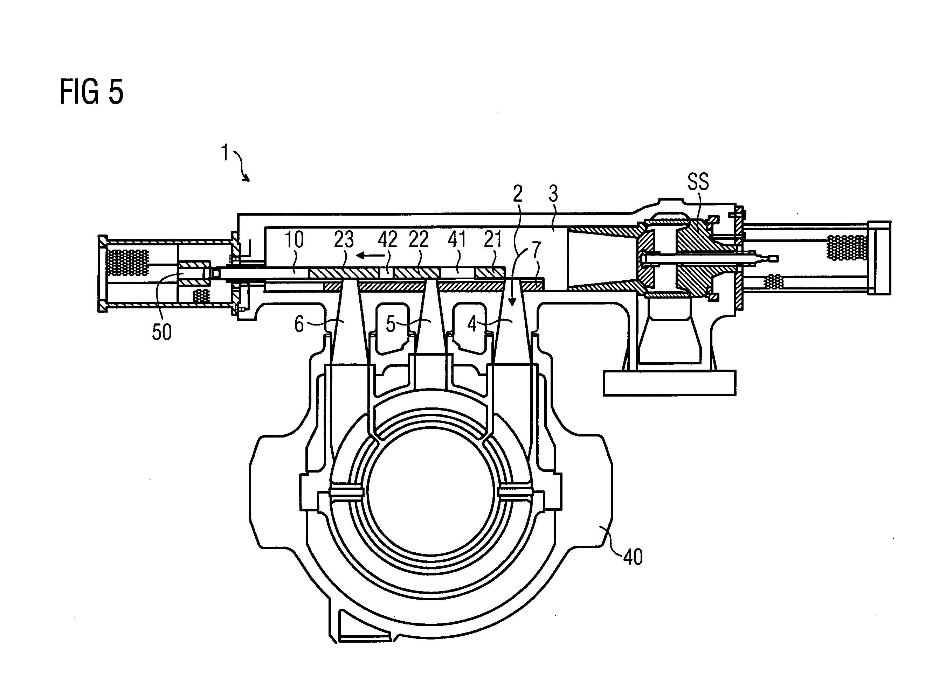

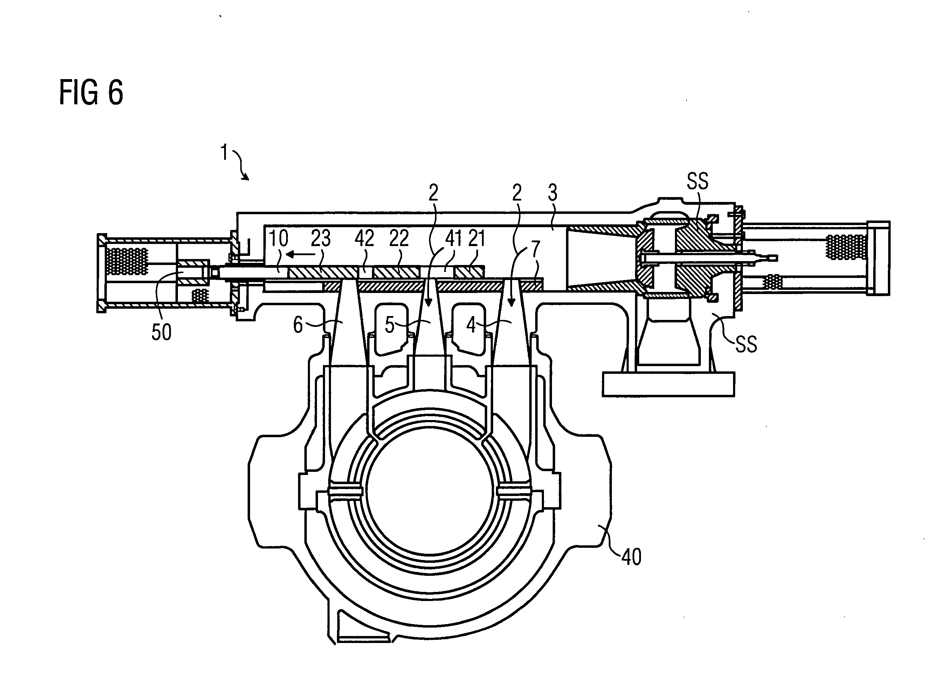

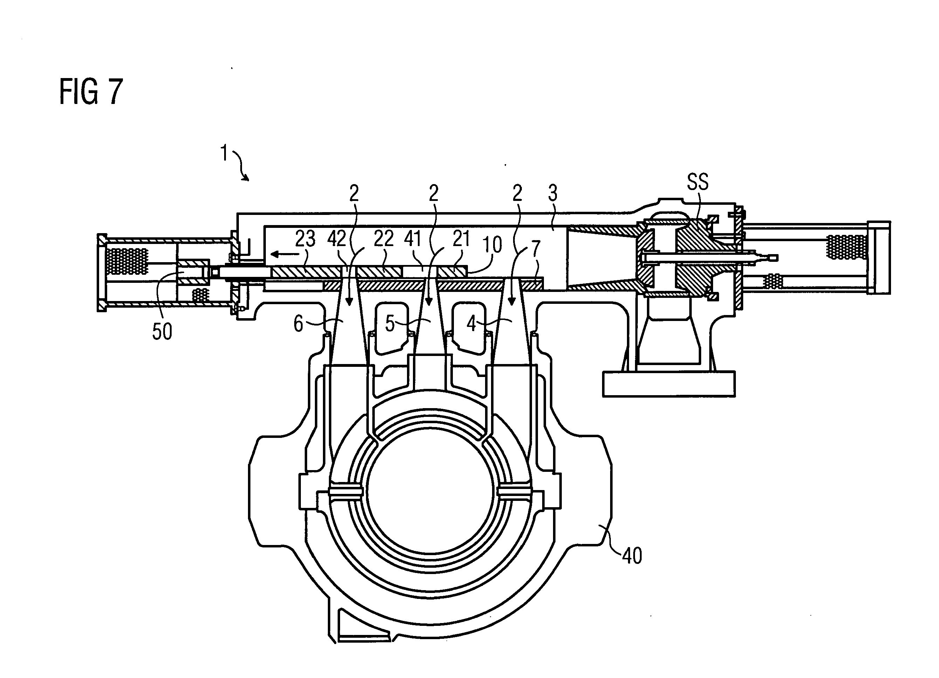

In der in Figur 5 gezeigten zweiten Stellung 32 des Schiebers 10 ist die erste Durchlassöffnung 4 vollständig geöffnet und die zweite und dritte Durchlassöffnung 5, 6 sind von dem Schieber 10 bzw. der zweiten 22 bzw. dritten Abdeckung 23 verschlossen. In Figur 6 und der Figur 7 sind die erste und die zweite Durchlassöffnung 4, 5 in einer dritten Stellung 33 des Schiebers 10 bzw. die erste, zweite und dritte Durchlassöffnung 4, 5, 6 in einer vierten Stellung 34 des Schiebers 10 jeweils ausschließlich geöffnet. Die gezielte Freigabe der Durchlassöffnungen 4, 5, 6 ist möglich aufgrund der abgestimmten Geometrie der Abdeckungen 21, 22, 23 und Durchbrechungen 41, 42 zwischen den Abdeckungen und der abgestimmten Verschiebung des Schiebers 10 mittels des Servomotors 50.

Die Abstimmung der Geometrie der Durchbrechungen 41, 42 auf das Verschieben des Schiebers 10 und die Anordnung der Durchlässe 4, 5, 6 erfolgt derart, dass der Schieber eine Längserstreckung aufweist, welche auf den Durchmesser des ersten Durchlasses 4 abgestimmt ist. Die erste Durchbrechung 41 ist auf die zweite Durchlassöffnung 5 abgestimmt und weist eine Längserstreckung auf die dem Durchmesser der Durchlassöffnung 5 entspricht zuzüglich des Verschiebewegs beginnend von der dritten Stellung 33, bis zur letzten bzw. vierten Stellung 34, in welcher auch der letzte, bzw. dritte Durchlass 6 durchlässig ist.

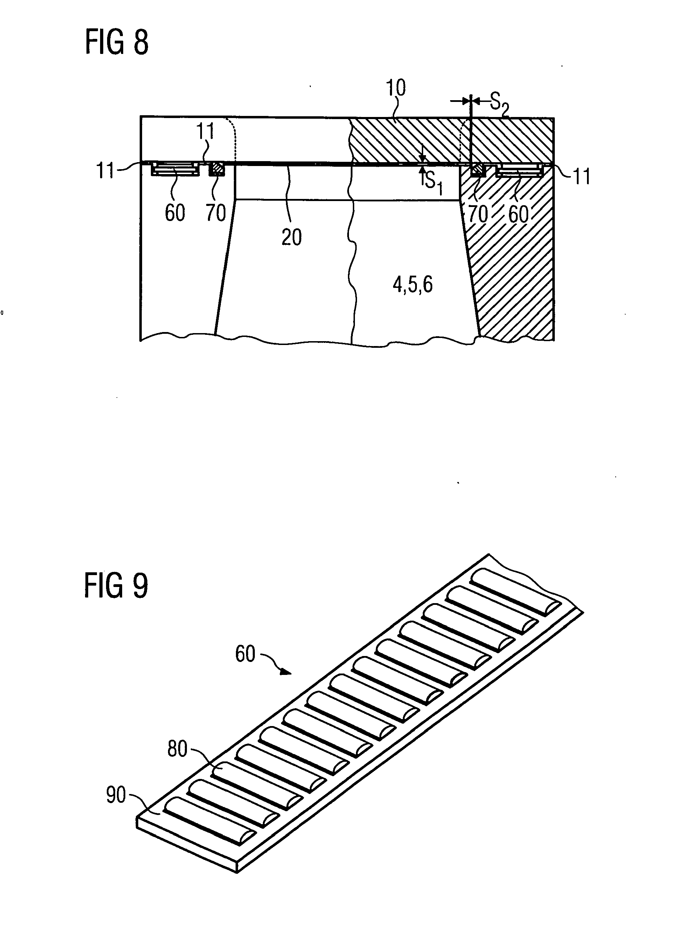

Figur 8 zeigt eine Detaildarstellung des Schiebers 10 und der Führung 7. Der Schieber 10 gleitet unter der Belastung des Frischdampfdrucks auf zwei als Nadelrollenflachkäfige ausgebildeten Flachkäfigführungen 60, wobei zwischen der Führung 7 und dem Schieber 10 ein Spalt S1 verbleibt. Dieser Spalt S1 wird von einer Dichtung 70 seitlich neben den Flachkäfigführungen 60 gegen den Frischdampfdruck abgedichtet.

Figur 9 zeigt eine Flachkäfigführung 60, die als Nadelrollenflachkäfig ausgebildet ist, wobei Zylinderstifte 80 in einem Grundkörper 90 drehbar angeordnet sind.

### Bezugszeichenliste

- S1: Spalt
- SS: Schnellschlussventil
- 1: Ventil
- 2: Dampfstrom
- 3: Eintrittskammer
- 4: erste Durchlassöffnung
- 5: zweite Durchlassöffnung
- 6: dritte Durchlassöffnung
- 7: Führung
- 8: Diffusorhälse
- 10: Schieber
- 11: Fläche
- 20: erste Ebene
- 21: erste Abdeckung
- 22: zweite Abdeckung
- 23: dritte Abdeckung
- 31: erste Stellung
- 32: zweite Stellung
- 33: dritte Stellung
- 34: vierte Stellung
- 40: Turbinengehäuse
- 41: erste Durchbrechung
- 42: zweite Durchbrechung
- 50: Servomotor
- 60: Flachkäfigführung
- 70: Dichtung
- 80: Zylinderstifte
- 90: Grundkörper

## Patentansprüche

1. Ventil (1) einer Dampfturbine zur Steuerung des einströmenden Dampfstroms (2) mit einem Schließelement, welches translatorisch beweglich relativ zu mindestens einer ersten Durchlassöffnung (4) ausgebildet ist,
**dadurch gekennzeichnet, dass**
das Schließelement als Schieber (10) ausgebildet ist, welcher Schieber (10) in einer die erste Durchlassöffnung (4) verschließenden ersten Stellung (31) an einer Fläche (11) anliegt, welche die erste Durchlassöffnung (4) umgibt, wobei der Schieber (10) in einer zu der Fläche (11) parallelen ersten Ebene (20) verschieblich ausgebildet ist, so dass der Querschnitt der ersten Durchlassöffnung (4) bei einer Verschiebung des Schiebers (10) aus der ersten Stellung (31) in eine zweite Stellung (32) zumindest teilweise durchlässig ist.

2. Ventil (1) nach Anspruch 1,
**dadurch gekennzeichnet, dass**
der Schieber (10) mindestens eine erste Abdeckung (21) aufweist, welche in der ersten Stellung (31) sich mit der ersten Durchlassöffnung (4) überdeckt und entsprechend dieser Überdeckung einen Durchlass des Ventils (1) unterbindet, in einer mittels Verschiebung des Schiebers (10) in der ersten Ebene (20) zu erreichenden zweiten Stellung (32) die erste Durchlassöffnung freigibt und entsprechend dieser Überdeckung einen Durchlass des Ventils (1) herstellt.

3. Ventil (1) nach Anspruch 2,
**dadurch gekennzeichnet, dass**
neben der ersten Durchlassöffnung (4) mindestens eine zweite Durchlassöffnung (5) angeordnet ist und der Schieber (10) neben der ersten Abdeckung (21) eine zweite Abdeckung (22) aufweist, welche in der zweiten Stellung (31) sich mit der zweiten Durchlassöffnung (22) überdeckt und entsprechend dieser Überdeckung einen Durchlass des Ventils (1) unterbindet, wobei in einer mittels Verschiebung des Schiebers (10) in der ersten Ebene (20) zu erreichenden dritten Stellung (33) des Schiebers (10) die erste Abdeckung (21) die erste Durchlassöffnung (4) und die zweite Abdeckung (22) die zweite Durchlassöffnung (5) jeweils höchstens teilweise überdecken und entsprechend ein Durchlass des Ventils (1) hergestellt ist.

4. Ventil (1) nach Anspruch 3,
**dadurch gekennzeichnet, dass**
neben der ersten (4) und der zweiten Durchlassöffnung (5) mindestens eine dritte Durchlassöffnung (6) angeordnet ist und der Schieber (10) neben der ersten (21) und der zweiten Abdeckung (22) eine dritte Abdeckung (23) aufweist, welche in einer mittels Verschiebung des Schiebers (10) in der ersten Ebene (20) zu erreichenden vierten Stellung (34) sich nicht mit der dritten Durchlassöffnung (6) überdeckt und entsprechend einen Durchlass des Ventils (1) herstellt, wobei in der ersten (31), zweiten (32) und dritten Stellung (33) der Schieber (10) die dritte Durchlassöffnung (6) mittels der dritten Abdeckung (23) verschließt und in der vierten Stellung (34) die erste Abdeckung (21) die erste Durchlassöffnung (4) freigibt, die zweite Abdeckung (22) die zweite Durchlassöffnung (5) freigibt, die dritte Abdeckung (23) die dritte Durchlassöffnung (6) freigibt entsprechend ein Durchlass des Ventils (1) hergestellt ist.

5. Ventil (1) nach einem der vorhergehenden Ansprüche,
**dadurch gekennzeichnet, dass**
der Schieber (10) mittels Flachkäfigführungen (60) gelagert ist.

6. Ventil (1) nach einem der vorhergehenden Ansprüche,
**dadurch gekennzeichnet, dass**
der Schieber (10) im Wesentlichen länglich ausgebildet ist und die Abdeckungen (21, 22, 23) in Längserstreckung im Wesentlichen hintereinander angeordnet sind.

7. Ventil nach einem der vorhergehenden Ansprüche,
**dadurch gekennzeichnet, dass**
die Flächen (11), welche die Durchlassöffnungen (4, 5, 6) umgeben, mit mindestens einer Dichtung (70) zu dem Schieber (10) versehen sind.

8. Ventil nach einem der vorhergehenden Ansprüche,
**dadurch gekennzeichnet, dass**
die der Schieber (10) Durchbrechungen (41, 42) aufweist, welche sich in Längsrichtung der Verschiebung des Schiebers (10) neben den Abdeckungen (21, 22, 23) befinden und die sich bei durchlässiger Freigabe der Durchlassöffnungen (4, 5, 6) in zumindest teilweiser Überdeckung mit den Durchlassöffnungen (4, 5, 6) befinden.
